# EUROPÄISCHE PATENTSCHRIFT

(11) **EP 3 798 470 B1**
(45) Veröffentlichungstag und Bekanntmachung des Hinweises auf die Patenterteilung: **08.03.2023**
(21) Anmeldenummer: 19200060.2
(22) Anmeldetag: 27.09.2019
(51) Int. Cl.: F16H 57/04, F03D 15/00, F03D 80/70, F16H 57/08

(54) **PLANETENGETRIEBE MIT VERBESSERTER SCHMIERSTOFFVERSORGUNG, ANTRIEBSSTRANG UND WINDKRAFTANLAGE**
PLANETARY GEAR WITH IMPROVED LUBRICANT SUPPLY, DRIVE TRAIN AND WIND TURBINE
ENGRENAGE ÉPICYCLOÏDAL À ALIMENTATION EN LUBRIFIANT AMÉLIORÉE, CHAÎNE CINÉMATIQUE ET ÉOLIENNE

(43) Veröffentlichungstag der Anmeldung: 31.03.2021
(73) Patentinhaber: Flender GmbH, 46395 Bocholt (DE)
(72) Erfinder: Haake, Norbert, 46282 Dorsten (DE); Lensing, Volker, 46414 Rhede (DE)
(74) Vertreter: Michalski Hüttermann & Partner Patentanwälte mbB

(56) Entgegenhaltungen:
- WO-A1-2013/021181
- WO-A2-2010/005790
- DE-A1-102010 031 161
- DE-A1-102015 223 669
- DE-A1-102018 120 930
- US-A- 4 271 928

## Beschreibung

Die Erfindung betrifft ein Planetengetriebe, das über eine verbesserste Schmierstoffversorgung verfügt. Die Erfindung betrifft ebenso einen Antriebsstrang, der über ein entsprechendes Planetengetriebe verfügt und eine Windkraftanlage, die mit einem solchen Antriebsstrang ausgestattet ist.

Aus EP 2 597 307 B1 ist eine Vorrichtung zur Übertragung von Versorgungsmitteln durch einen Antriebsstrang einer Windkraftanlage bekannt, die ein doppelwandiges Durchführungsrohr umfasst, das ein inneres und ein äußeres Rohr umfasst. Das innere und das äußere Rohr bilden einen Ringkanal für Schmieröl aus. Das innere und das äußere Rohr sind auf Endstücke aufgeschoben, durch die zwischen dem äußeren und dem inneren Rohr ein Wandabstand eingestellt wird.

Die Druckschrift DE 10 2010 060 147 A1 offenbart ein Planetengetriebe mit einem Zentralverteiler, der als Ringkanal ausgeführt ist. Über eine abtriebsseitig angeordnete Einlassstelle wird Schmierstoff zugeführt, der an einer weiter antriebsseitig platzierten Auslassstelle einer Planetenstufe zugeführt wird. An der Auslassstelle sind Dichtungen aus PTFE positioniert, die in Kontakt mit dem Zentralverteiler stehen.

Die bisher unveröffentlichte Internationale Anmeldung mit dem Aktenzeichen PCT/EP2019/064566 offenbart ein Planetengetriebe, das über drei hintereinander geschaltete Planetenstufen verfügt. Die Planetenstufen können dabei mit mindestens vier, fünf, oder auch bis zu zehn Planetenrädern ausgestattet sein.

Aus US 4 271 928 A ist ein einstufiges Planetengetriebe mit einem doppelwandigen Rohr bekannt, bei dem das äußere Rohr zu einem stirnseitigen Ende des inneren Rohrs beabstandet einen zu einer Planetenradlagerung führen Auslass aufweist.

Aus WO 2010/005790 A2 und DE 10 2010 031161 A1 ist jeweils ein Planetengetriebe mit den Merkmalen des Oberbegriffs des Anspruchs 1 bekannt.

Planetengetriebe werden in einer Vielzahl an technischen Gebieten eingesetzt, in denen steigende Anforderungen in puncto Leistungsfähigkeit, Zuverlässigkeit, Lebensdauer und Wirtschaftlichkeit gestellt werden. Ferner wird unter anderem eine effiziente Nutzung von Schmierstoffen angestrebt. Dies gilt insbesondere für Planetengetriebe in Windkraftanlagen. Der vorliegenden Erfindung liegt die Aufgabe zugrunde, ein Planetengetriebe bereitzustellen, das in zumindest einem der skizzierten Aspekte eine technische Verbesserung bietet.

Die Aufgabenstellung wird durch ein erfindungsgemäßes Planetengetriebe gelöst. Das Planetengetriebe weist zumindest eine erste und eine zweite Planetenstufe auf, die hintereinandergeschaltet sind. Das Planetengetriebe weist auch ein zumindest doppelwandiges Rohr, das in einem Bereich einer Hauptdrehachse des Planetengetriebes angebracht ist. Das doppelwandige Rohr umfasst ein inneres Rohr und ein äußeres Rohr, durch die ein Ringkanal für einen Schmierstoff gebildet wird. Das innere Rohr kann beispielsweise als Pitchrohr ausgebildet sein, durch das Leitungen durch das Planetengetriebe führbar sind. Das doppelwandige Rohr weist, entlang der Hauptdrehachse betrachtet, in einem mittleren Abschnitt eine Auslassstelle auf, die zu einem Abgeben von Schmierstoff aus dem doppelwandigen Rohr in eine Getriebekomponente ausgebildet ist. An der Auslassstelle ist eine Buchse angeordnet. Die Buchse kann dabei einteilig oder mehrteilig ausgebildet sein. Eine mehrteilige Buchse kann beispielsweise zwei axial beabstandet angeordnete Ringbuchsen umfassen. Der Schmierstoff passiert bei einem Abgeben an die Getriebekomponente somit die Buchse. Durch die Buchse wird eine leckagearme, nahezu leckagefreie, Übergabe des Schmierstoffs an die Getriebekomponente ermöglicht. Eine Buchse ist hierbei besonders langlebig, leckagehemmend und wirtschaftlich herstellbar. Dadurch wird ein erhöhter Durchsatz an Schmierstoff ermöglicht, der beispielsweise durch erhöhten Förderdruck im Schmierstoff gewährleistet werden kann. Infolge der leckagehemmenden Wirkung der Buchse ist ein so eintretender Schmierstoffverlust minimiert, und somit noch technisch akzeptabel. Infolgedessen kann für Getriebekomponenten, beispielsweise für Gleitlager von Planetenrädern oder Sprühschmierungen von Verzahnungen, so eine verbesserte Schmierung und/oder Kühlung erzielt werden. Dies erlaubt wiederum, das Planetengetriebe einer erhöhten Betriebslast zu unterwerfen. Die erfindungsgemäße Buchse dient damit zu einer Leistungssteigerung des erfindungsgemäßen Planetengetriebes. Die Buchse selbst weist einen relativ geringen Außendurchmesser auf und erlaubt somit einen sparsamen Einsatz von entsprechend geeigneten Werkstoffen wie beispielsweise Bronze, teflonbeschichtete Materialien oder Sintermetalle, aus denen die Buchse hergestellt sein kann.

An der Auslassstelle zwischen der Buchse und dem doppelwandigen Rohr ist ein Spalt ausgebildet. Im bestimmungsgemäßen Betrieb tritt Schmierstoff in den Spalt ein, so dass zwischen dem äußeren Rohr des doppelwandigen Rohrs und der Buchse keine unmittelbare Berührung vorliegt. Der Spalt weist eine minimierte Spalthöhe, also eine radiale Abmessung, auf. Die Spalthöhe kann 0,1 mm bis 0,5 mm, insbesondere 0,25 mm bis 0,35 mm betragen. Die Spalthöhe ist dabei die Spalthöhe, die sich im bestimmungsgemäßen Betrieb des Planetengetriebes unter Berücksichtigung einer Wärmeausdehnung der Buchse ergibt. Durch die minimierte Spalthöhe wird ein Schmierstoffverlust am Spalt verringert. Dadurch, dass die Buchse einen relativ geringen Außendurchmesser aufweist, stehen die Toleranzen, die zur Erzielung eines minimierten Spalts einzuhalten sind, in einem günstigeren Verhältnis zu den Gesamtabmessungen, insbesondere zum Außendurchmesser der Buchse. Dies erlaubt eine kosteneffiziente Herstellung der Buchse.

Das Planetengetriebe weist im Bereich der Auslassstelle im mittleren Abschnitt ein Führungslager auf, das zu einem Einstellen des Spalts ausgebildet ist. Das Führungslager, das beispielweise als Wälzlager oder Gleitlager ausgebildet sein kann, ist derart positioniert, dass es sich gegen die gleiche Getriebekomponente wie die Buchse abstützt. Dazu kann das Lager benachbart zur Buchse positioniert sein. Insbesondere können die Buchse und das Führungslager an einer Innenseite einer Nabe eines Planetenträgers der zweiten Planetenstufe angeordnet sein. Derartige Führungslager sind in eine Vielzahl an Größen einfach verfügbar und bieten ein hohes Maß an Ausrichtungspräzision für das doppelwandige Rohr, insbesondere für dessen äußeres Rohr. Gleichzeitig erlaubt ein solches Führungslager, bezogen auf die Hauptdrehachse, eine relative Drehung zwischen dem doppelwandigen Rohr und der entsprechenden Getriebekomponente. Unter wechselnden Betriebsbedingungen des Planetengetriebes können im Bereich des mittleren Abschnitts des doppelwandigen Rohres Verlagerungen, insbesondere in radialer Richtung, auftreten. Dadurch kann der Spalt zwischen der Buchse und dem doppelwandigen Rohr gestört, werden. Insbesondere kann der Spalt auf einer Seite radial verengt und auf einer entgegengesetzten Seite radial geweitet werden, was wiederum zu erhöhtem Schmierstoffverlust führt. Je näher das Führungslager axial an der Buchse angeordnet ist, umso stärker können Verlagerungen, die zu einer Störung des Spalts führen, vermieden werden. Dies erlaubt es, in einfacher Weise die Belastbarkeit des beanspruchten Planetengetriebes zu steigern.

Darüber hinaus kann das beanspruchte Planetengetriebe in der ersten Planetenstufe mindestens fünf Planetenräder, bevorzugt fünf bis zwölf, weiter bevorzugt sieben bis zehn Planetenräder, aufweisen. Alternativ oder ergänzend kann die zweite Planetenstufe mindestens vier, bevorzugt sechs oder sieben, Planetenräder aufweisen. Die Planetenräder können dabei ferner im jeweiligen Planetenträger jeweils auf Gleitlagern oder Wälzlagern drehbar angeordnet sein. Je mehr Planetenräder in einem Planetenträger angeordnet sind, umso mehr Schmierstoff ist in der entsprechenden Planetenstufe notwendig. Die Verwendung einer Buchse an der Auslassstelle im mittleren Bereich des doppelwandigen Rohrs erlaubt es somit, bei erhöhtem Durchsatz von Schmierstoff die Schmierstoffverluste zu minimieren. Insbesondere kann so eine Steigerung des Durchsatzes an Schmierstoff erzeugt werden, ohne den Förderdruck zu erhöhen. Der Förderdruck ist im Wesentlichen dadurch begrenzt, dass durch zu hohen Förderdruck beispielsweise an Flachstrahldüsen Schaumbildung auftreten kann. Dadurch wird eine leistungsdichtesteigernde Konfiguration mit einer erhöhten Anzahl an Planetenrädern in den einzelnen Planetenstufen ermöglicht. Entsprechende Planetengetriebe sind in der bisher unveröffentlichten Europäischen Patentanmeldung mit dem Anmeldeaktenzeichen 18179589.9 bekannt, deren Offenbarungsgehalt per Verweisung in die vorliegende Anmeldung miteinbezogen wird. Die beanspruchte Lösung ist dabei auf sämtliche Ausführungsformen der Europäischen Patentanmeldung 18179589.9 anwendbar.

In einer weiteren Ausführungsform des beanspruchten Planetengetriebes entspricht eine Breite der Buchse im Wesentlichen einer Wandstärke einer Bodenplatte des Planetenträgers der zweiten Planetenstufe. Unter der Breite der Buchse ist hierbei im montierten Zustand deren axiale Abmessung, also entlang der Hauptdrehachse, zu verstehen. Die Buchse ist innerhalb des Planetengetriebes angeordnet, wo entsprechender Bauraum in Axialrichtung vorliegt, der eine erhöhte Breite der Buchse erlaubt. Beispielweise kann an der Innenseite einer Nabe des Planetenträgers der zweiten Planetenstufe eine entsprechend dimensionierte Bodenplatte ausgebildet sein. Die Bodenplatte kann dabei auch einstückig mit dem Planetenträger der zweiten Planetenstufe ausgebildet sein. Je höher die Breite der Buchse ist, umso höher ist die leckagehemmende Wirkung des Spalts zwischen der Buchse und dem doppelwandigen Rohr und umso geringer die Schmierstoffverluste. Die beanspruchte Lösung erlaubt es damit in konstruktiv einfacher Weise, Bauraum für eine breite Buchse zur Verfügung zu stellen, durch die wiederum die Schmierstoffverluste minimiert werden können. Buchsen unterschiedlicher Breiten können in einfacher und wirtschaftlicher Weise mit relativ hoher Präzision hergestellt werden. Die Vorzüge der beanspruchten Lösung werden somit in einfacher und kosteneffizienter Weise weiter gesteigert.

Darüber hinaus kann die zweite Planetenstufe, in deren Bereich die Auslassstelle im mittleren Bereich des doppelwandigen Rohrs ausgebildet ist, zwischen der ersten Planetenstufe und einer dritten Planetenstufe angeordnet sein. Die beanspruchte Lösung erlaubt es, eine zuverlässige, leckagearme und gleichzeitig leistungsfähige Schmierstoffversorgung für Planetenstufen bereitzustellen, die in einem axial inneren Bereich eines Planetengetriebes angeordnet sind. Dadurch, dass eine Buchse eingesetzt wird, zwischen der und dem doppelwandigen Rohr keine unmittelbare Berührung vorliegt, liegt auch kein technisch relevanter Verschleiß vor, der häufige Inspektionen der Auslassstelle erfordert. Das beanspruchte Planetengetriebe kann deshalb drei oder mehr Planetenstufen oder weitere Stirnradstufen aufweisen, durch die die zweite oder auch weiter innenliegende Planetenstufe nur aufwendig zugänglich ist. Hierdurch werden komplexe Planetengetriebe mit einer erhöhten Anzahl an Planetenstufen technisch praktikabel herstellbar und wirtschaftlich betreibbar.

Des Weiteren kann das doppelwandige Rohr im beanspruchten Planetengetriebe zerstörungsfrei demontierbar ausgebildet sein. Hierzu können das äußere und/oder das innere Rohr mit Dichtungen an einer Bodenplatte eines Planetenträgers der ersten Planetenstufe befestigt sein. Alternativ oder ergänzend können das äußere und/oder das innere Rohr an einem Deckel, beispielsweise einem Gehäusedeckel, miteinander verbunden sein. Des Weiteren können das äußere und/oder innere Rohr axial geteilt ausgebildet sein. Das äußere bzw. innere Rohr wird dementsprechend bei der Montage zusammengesetzt. Dies kann über eine drehfeste Verbindung, formschlüssig oder über ein weiteres drehmomentübertragendes Bauteil, beispielsweise eine Passfeder oder einen Stift, oder über einen Kraftschluss, beispielweise an einem Kegelschrumpfsitz oder Zylinderschrumpfsitz. Durch die reduzierten axialen Abmessungen der entsprechenden Komponenten des äußeren bzw. inneren Rohrs wird deren Handhabung bei einer Wartung oder Reparatur vereinfacht. Dies vereinfacht insbesondere Wartungsarbeiten in einer Gondel einer Windkraftanlage.

In einer weiteren Ausführungsform des beanspruchten Planetengetriebes ist der Planetenträger der zweiten Planetenstufe in zumindest einem Lager drehbar aufgenommen, das dazu ausgebildet ist, Axialkräfte und/oder Radialkräfte aufzunehmen. Ein solches Lager kann beispielsweise als Axial-Pendelrollenlager oder als Kegelrollenlager ausgebildet sein. Ein derartiges Lager erlaubt es, Bewegungen des Planetenträgers in der zweiten Planetenstufe zu minimieren oder zu vermeiden, durch die der Spalt an der Buchse gestört wird. Gleichzeitig bietet ein solches Lager ein hohes Maß an Belastbarkeit und erlaubt ein präzises Einstellen einer Einbauposition des Planetenträgers der zweiten Planetenstufe. Hierdurch werden die oben skizzierten Vorzüge der Erfindung in besonderem Umfang verwirklicht.

Ferner kann im beanspruchten Planetengetriebe im Bereich eines ersten Endes des doppelwandigen Rohrs eine Auslassstelle ausgebildet sein. Die Auslassstelle am ersten Ende des doppelwandigen Rohrs ist dazu ausgebildet, die erste Planetenstufe mit Schmierstoff zu versorgen, beispielsweise Planetenräder, die auf Gleitlagern oder Wälzlagern im Planetenträger drehbar aufgenommen sind, Verzahnungen in der ersten Planetenstufe, und/oder Lager, in denen der Planetenträger gelagert ist. Das äußere und/oder das innere Rohr des doppelwandigen Rohrs können dazu drehfest mit dem Planetenträger der ersten Planetenstufe verbunden sein. Alternativ kann das doppelwandige Rohr auch drehfest jeglicher anderen drehenden oder stationären Getriebekomponente befestigt sein. Weiter alternativ kann das doppelwandige Rohr auch lose im Planetengetriebe drehbar ausgebildet sein. Infolgedessen liegen zwischen dem Planetenträger der ersten Planetenstufe und dem doppelwandigen Rohr keine relative Drehung vor. Dementsprechend kann die Auslassstelle am ersten Ende über Dichtringe abgedichtet werden. Die Dichtringe sind folglich im Betrieb statisch und stellen somit eine einfache Möglichkeit für eine geeignete Abdichtung zur Verfügung. Insbesondere unterliegen statische Dichtringe nahezu keinem Verschleiß und sind im Wesentlichen nur ihrer Alterung unterworfen. Demnach kann die Auslassstelle am ersten Ende mit einfachen Mitteln bei hoher Zuverlässigkeit betrieben werden.

Darüber hinaus kann an einem zweiten Ende des doppelwandigen Rohrs eine Zulaufbuchse angeordnet sein. Das zweite Ende kann dabei an einem der ersten Planetenstufe abgewandten Ende des doppelwandigen Rohrs liegen. Ferner kann am zweiten Ende ein mitdrehender Deckel angebracht sein. Durch die Zulaufbuchse erfolgt ein Zufluss an Schmierstoff, der über die Auslassstellen in mittleren Abschnitt gegebenenfalls am ersten Ende dem Planetengetriebe zugeführt wird. Die Zulaufbuchse kann dabei gemäß einer der Ausführungsformen der Buchse an der Auslassstelle im mittleren Abschnitt ausgebildet sein. Die Zulaufbuchse ist zwischen dem äußeren Rohr und einer Gehäusewandung oder Gehäusedeckel des Planetengetriebes angeordnet, wobei in der Gehäusewandung oder dem Gehäusedeckel eine Zulaufbohrung für den Schmierstoff ausgebildet ist. Insbesondere kann zwischen der Zulaufbuchse und dem doppelwandigen Rohr ein Spalt ausgebildet sein. Dementsprechend wird so eine zuverlässige und leckagearme Zufuhr von Schmierstoff für das doppelwandige Rohr verwirklicht.

Die zugrundeliegende Aufgabenstellung wird auch durch den erfindungsgemäßen Antriebsstrang gelöst. Der Antriebsstrang umfasst eine Rotorwelle, die mit einem Rotor einer Windkraftanlage verbindbar ist. Die Rotorwelle ist drehmomentübertragend mit einem Getriebe gekoppelt, das wiederum drehmomentübertragend mit einem Generator verbunden ist. Dadurch ist eine Drehung des Rotors in eine Drehung des Generators umsetzbar und Elektrizität erzeugbar. Der Antriebsstrang ist dazu ausgebildet, in einer Gondel einer Windkraftanlage aufgenommen zu werden. Erfindungsgemäß ist das Getriebe im Antriebsstrang als Planetengetriebe gemäß zumindest einer der oben skizzierten Ausführungsformen ausgebildet.

Gleichermaßen wird die Aufgabenstellung, von der die Erfindung ausgeht, durch die erfindungsgemäße Windkraftanlage gelöst. Die Windkraftanlage weist eine Gondel auf, an der ein Rotor drehbar befestigt ist. In der Gondel ist ein Antriebsstrang aufgenommen, der mit dem Rotor drehmomentübertragend verbunden ist. Der Antriebsstrang ist dabei gemäß einer der oben dargestellten Ausführungsformen ausgebildet.

Die Aufgabenstellung wird auch durch die erfindungsgemäße Industrie-Applikation gelöst. Die Industrie-Applikation umfasst eine Antriebseinheit, die beispielweise als Elektromotor, Verbrennungsmotor oder Hydraulikmotor ausgebildet sein kann. Die Antriebseinheit stellt eine Antriebsleistung zur Verfügung, die einem Getriebe zugeführt wird. Dazu ist die Antriebseinheit drehmomentübertragend mit dem Getriebe verbunden. Das Getriebe wiederum ist drehmomentübertragend mit einer Abtriebseinheit verbunden, der die Antriebsleistung unter veränderter Drehzahl und unter Berücksichtigung von mechanischen Verlusten zur Verfügung gestellt wird. Die Abtriebseinheit kann dabei als mechanische Anwendung ausgebildet sein, so dass die Industrie-Applikation insgesamt beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch einen Längsschnitt eines nicht erfindungsgemässen Planetengetriebes;
- FIG 2: schematisch im Längsschnitt eine Detailansicht einer Auslassstelle in dem nicht erfindungsgemässen Planetengetriebe
- FIG 3: schematisch im Längsschnitt eine Detailansicht einer weiteren Auslassstelle in dem nicht erfindungsgemässen Planetengetriebe

- FIG 4: schematisch im Längsschnitt eine Detailansicht einer Zulaufbuchse in dem nicht erfindungsgemässen Planetengetriebe

- FIG 5: schematisch im Längsschnitt eine Detailansicht einer Auslassstelle in einer Ausführungsform des beanspruchten Planetengetriebes;
- FIG 6: eine geschnittene Schrägansicht einer Ausführungsform einer beanspruchten Windkraftanlage mit einem beanspruchten Antriebsstrang;
- FIG 7: einen schematischen Aufbau einer beanspruchten Industrie-Applikation.

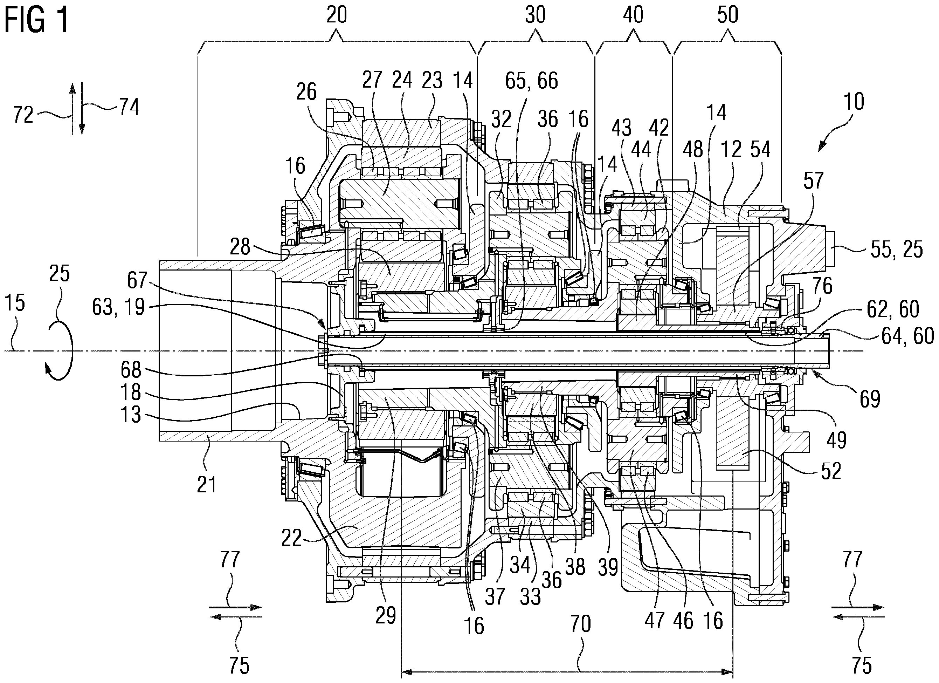

In FIG 1 ist schematisch ein Planetengetriebe 10 im Längsschnitt dargestellt.

Das Planetengetriebe 10 umfasst eine erste, zweite und dritte Planetenstufe 20, 30, 40, die hintereinandergeschaltet sind. Der dritten Planetenstufe 40 ist eine Stirnradstufe 50 nachgeschaltet. Die erste Planetenstufe 20 weist eine Eingangswelle 21 auf, die um eine Hauptdrehachse 15 drehbar ist und über die eine Antriebsleistung 25 zuführbar ist. Die Eingangswelle 21 ist einstückig mit einem Planetenträger 22 der ersten Planetenstufe 20 ausgebildet. Im Planetenträger 22 der ersten Planetenstufe 20 ist über Steglager 16, die als Wälzlager ausgebildet sind, drehbar an einem Gehäuse 12 bzw. einer Gehäusewandung 14 des Planetengetriebes 10 gelagert. Ferner ist eine Mehrzahl an Planetenradbolzen 27 im Planetenträger 22 der ersten Planetenstufe 20 lösbar angebracht, auf denen wiederum jeweils ein Wälzlager 26 angeordnet ist. Auf den Wälzlagern 26 wiederum sind Planetenräder 24 angeordnet, die mit einem Hohlrad 23 der ersten Planetenstufe 20 kämmen. Im Planetenträger 22 der ersten Planetenstufe 20 sind mindestens fünf Planetenräder 24, vorzugsweise sieben bis zehn Planetenräder 24, angeordnet. Die Planetenräder 24 kämmen auch mit einem Sonnenrad 28 der ersten Planetenstufe 20, das wiederum mit einer Sonnenwelle 29 verbunden ist.

Die Sonnenwelle 29 der ersten Planetenstufe 20 ist einstückig mit einem Planetenträger 32 der zweiten Planetenstufe 30 ausgebildet und so drehmomentübertragend gekoppelt. Analog zum Planetenträger 22 der ersten Planetenstufe 20 weist der Planetenträger 32 der zweiten Planetenstufe 30 mehrere lösbare Planetenradbolzen 37 auf, auf denen jeweils ein Wälzlager 36 angeordnet ist. Der Planetenträger 32 der zweiten Planetenstufe 30 ist beidseitig in Steglager 16 an Gehäusewandungen 14 des Planetengetriebes 10 drehbar aufgenommen. Auf den Wälzlagern 36 der zweiten Planetenstufe 30 ist jeweils ein Planetenrad 34 positioniert. In der zweiten Planetenstufe 20 sind dabei mindestens vier, vorzugsweise fünf oder sechs Planetenräder 34 angeordnet. Die Planetenräder 34 kämmen mit einem Hohlrad 33 und mit einem Sonnenrad 38 der zweiten Planetenstufe 30.

Das Sonnenrad 38 der zweiten Planetenstufe 30 ist mit einer Sonnenwelle 39 verbunden, die wiederum einstückig mit einem Planetenträger 42 der dritten Planetenstufe 40 ausgebildet ist. Die dritte Planetenstufe 40 ist im Wesentlichen analog zur ersten und zweiten Planetenstufe 20, 30 aufgebaut. Der Planetenträger 42 der dritten Planetenstufe 40 ist beidseitig in Steglagern 16 drehbar aufgenommen, die an Gehäusewandungen 14 angeordnet sind. Im Planetenträger 42 der dritten Planetenstufe 40 ist eine Mehrzahl an Planetenradbolzen 47 lösbar aufgenommen, auf denen wiederum jeweils ein Wälzlager 46 angebracht ist. Auf den Wälzlagern 46 in der dritten Planetenstufe 40 sind wiederum Planetenräder 44 drehbar angeordnet, die mit einem Hohlrad 43 und einem Sonnenrad 48 der dritten Planetenstufe 40 kämmen. Das Sonnenrad 43 ist wiederum mit einer Sonnenwelle 49 der dritten Planetenstufe 40 einstückig ausgebildet, durch die eine Verbindung mit einer Stirnradstufe 50 hergestellt wird.

Die Stirnradstufe 50 umfasst ein erstes Stirnrad 52, das drehmomentübertragend auf einer Hohlwelle angeordnet ist welche wiederum drehmomentübertragend mit der Sonnenwelle 49 der dritten Planetenstufe 40 verbunden. Das erste Stirnrad 52 kämmt mit einem zweiten Stirnrad 54, das auch zur Stirnradstufe 50 gehört und wiederum mit einer Ausgangswelle 55 drehmomentübertragend verbunden ist. Über die Ausgangswelle 55 wird die an der Eingangswelle 21 eingeleitete Antriebsleistung 25 bei veränderter Drehzahl, unter Berücksichtigung von mechanischen Verlusten im Planetengetriebe 10, wieder abgegeben.

Im Planetengetriebe 10 ist im Bereich der Hauptdrehachse 15 ein doppelwandiges Rohr 60 angeordnet, das sich im Wesentlichen durch das Planetengetriebe 10 erstreckt. Das doppelwandige Rohr 60 umfasst ein äußeres Rohr 62, das ein inneres Rohr 64 umschließt. Dadurch ist zwischen dem äußeren und dem inneren Rohr 62, 64 ein Ringkanal 63 ausgebildet, durch den im bestimmungsgemäßen Betrieb des Planetengetriebes 10 ein Schmierstoff 19 geführt wird. Das innere Rohr 64 ist als Pitch-Rohr ausgebildet, das zu einem Durchführen von nicht näher dargestellten elektrischen Leitungen, Datenleitungen, Rohre und Schläuchen geeignet ist. In einem mittleren Abschnitt 70 des doppelwandigen Rohrs 60, der sich entlang der Hauptdrehachse 15 zumindest im Bereich der zweiten Planetenstufe 30 befindet, ist eine Auslassstelle 65 ausgebildet. Die Auslassstelle 65 im mittleren Abschnitt 70 ist im Wesentlichen als Öffnung im äußeren Rohr 62 ausgebildet, durch die Schmierstoff 19 an die zweite Planetenstufe 30 abgebbar ist. An der Auslassstelle 65 im mittleren Abschnitt 70 ist eine Buchse 66 angeordnet, durch die der aus der Auslassstelle 65 austretende Schmierstoff 19 in die zweite Planetenstufe 30 geführt wird. Unter anderem dient dieser Schmierstoff 19 zu einer Schmierstoffversorgung der Wälzlager 36 in der zweiten Planetenstufe 30.

Ferner ist das doppelwandige Rohr 60 an einem ersten Ende 67, das im Bereich der ersten Planetenstufe 20 liegt, mit einem Deckel 18 drehfest verbunden, der an einer Innenseite 13 der Eingangswelle 21 angeordnet ist. Infolgedessen liegt zwischen dem äußeren Rohr 62 und dem inneren Rohr 64 im bestimmungsgemäßen Betrieb des Planetengetriebes 10 keine Relativdrehung vor. Das doppelwandige Rohr 60 folgt im Betrieb einer Drehung der Eingangswelle 21. Das innere Rohr 64 überragt das äußere Rohr 62 im Bereich des ersten Endes 67 in eine axial äußere Richtung. Eine axial äußere Richtung ist in FIG 1 durch die Pfeile 75 symbolisiert, eine axial innere Richtung durch die Pfeile 77. Eine radial äußere Richtung in FIG 1 durch den Pfeil 72, eine radial innere Richtung durch den Pfeil 74 symbolisiert. Im Bereich des ersten Endes 67 ist eine weitere Auslassöffnung 68 ausgebildet, durch die die erste Planetenstufe 10 mit Schmierstoff 19 versorgbar ist. Darüber hinaus ist an einem zweiten Ende 69 im Gehäuse 12 eine Zulaufbuchse 76 angeordnet, über die der Schmierstoff 19 in den Ringkanal 63 einleitbar ist.

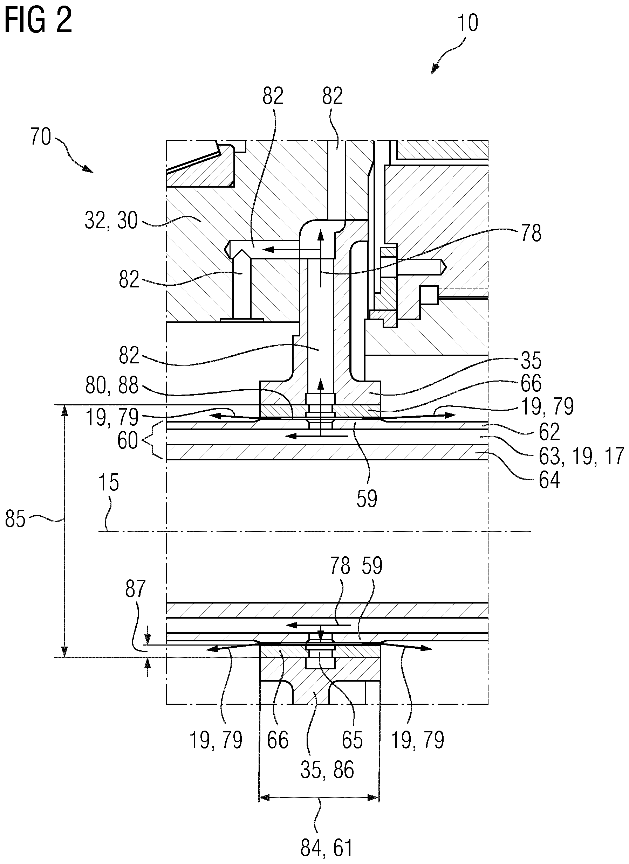

FIG 2 zeigt schematisch eine Detailansicht aus dem mittleren Abschnitt 70 gemäß FIG 1 im Längsschnitt. Im Einzelnen zeigt FIG 2 das doppelwandige Rohr 60, das das äußere Rohr 62 umfasst, das das innere Rohr 64 umschließt und so den Ringkanal 63 für Schmierstoff 19 ausbildet. An der Auslassstelle 65 ist eine Buchse 66 angeordnet, die beispielsweise auf Bronze hergestellt ist, und mit einer Bodenplatte 35 verbunden ist, die wiederum mit dem Planetenträger 32 der zweiten Planetenstufe 30 verbunden ist. In der Bodenplatte 35 ist ein Schmierstoffkanal 82 ausgebildet, durch den Schmierstoff 19 an weitere Schmierstoffkanäle 82 im Planetenträger 32 der zweiten Planetenstufe 30 weiterleitbar ist. Eine im bestimmungsgemäßen Betrieb auftretende Schmierstoffströmung 78 ist in FIG 2 mit Pfeilen dargestellt. Zwischen der Buchse 66 und dem äußeren Rohr 62 ist ein Spalt 80 ausgebildet, durch den Schmierstoff 19 als Leckageverlust 79 austreten kann. Der Spalt 80 weist in Radialrichtung eine Spalthöhe 88 auf, die unter anderem durch eine Aufdickung 59 am äußeren Rohr 62 und eine Wandstärke 87 der Buchse 66 einstellbar ist. Je geringer die Spalthöhe 88 ist, umso niedriger sind die Leckageverluste 79.

Die Buchse 66 weist auch eine Breite 61 auf, die im Wesentlichen einer Spaltbreite 84 entspricht. Je höher die Spaltbreite 84 ist, umso geringer sind die Leckageverluste 79. Dadurch, dass im Spalt 80 im bestimmungsgemäßen Betrieb Schmierstoff 19 vorliegt, ist die Buchse 66 frei von unmittelbarem mechanischem Kontakt mit dem äußeren Rohr 62, so dass die Auslassstelle 65 im Wesentlichen verschleißfrei ist. Dementsprechend weist die Buchse 66 eine reduzierte Wandstärke 87 auf, was wiederum eine Ersparnis an Material ermöglicht.

Um eine hohe Spaltbreite 84 zu gewährleisten ist die Bodenplatte 35 radial innen im Wesentlichen als Nabe 86 ausgebildet. Die Buchse 66 erstreckt sich im Wesentlichen über die Breite der Nabe 86, über die zusammen mit der Breite 61 der Buchse 66 die Spaltbreite 84 definiert ist. Die Auslassstelle 65 im mittleren Abschnitt 70 ist in puncto Spalthöhe 88 und Spaltbreite 84 derart ausgebildet, dass die Leckageverluste 79 an Schmierstoff 19 minimiert sind. Da die Buchse 66 im Inneren des Planetengetriebes 10 ausgebildet ist, liegt in Axialrichtung entsprechend viel Bauraum vor, für den eine Buchse 66 mit einer erhöhten Breite 61 einbaubar ist. Dementsprechend ist die Auslassstelle 65 in einfacher Weise mit minimierten Leckageverlusten 79 herstellbar. Insgesamt kann die Buchse 66, und damit die Auslassstelle 65, in konstruktiv einfacher Weise auf minimale Leckageverluste 79 ausgelegt werden, was wiederum einen erhöhten Förderdruck 17 im Ringkanal 63 ermöglicht. Dies bietet die Möglichkeit, bei reduzierten Leckageverlusten 79 die zweite Planetenstufe 30 mit Schmierstoff 19 zu versorgen, die eine erhöhte Zahl an Planetenrädern 34, also zumindest vier, vorzugsweise fünf oder sechs Planetenräder 34 aufweist. Darüber hinaus weist die Buchse 66 einen relativ geringen Außendurchmesser 85 auf, was wiederum ermöglicht, die Buchse 66 mit einer reduzierten Menge an Material herzustellen. Durch den reduzierten Materialaufwand können deshalb in wirtschaftlicher Weise auch kostenintensive leistungsfähigere Materialien für die Buchse 66 verwendet werden, beispielsweise teflonbeschichtete Materialien oder Sintermetalle. Darüber hinaus erlaubt der Aufbau gemäß FIG 2 es auch, axiale Verlagerungen des doppelwandigen Rohrs 60 an der Buchse 66 ohne zusätzliche Leckageverluste 79 aufzunehmen bzw. auszugleichen.

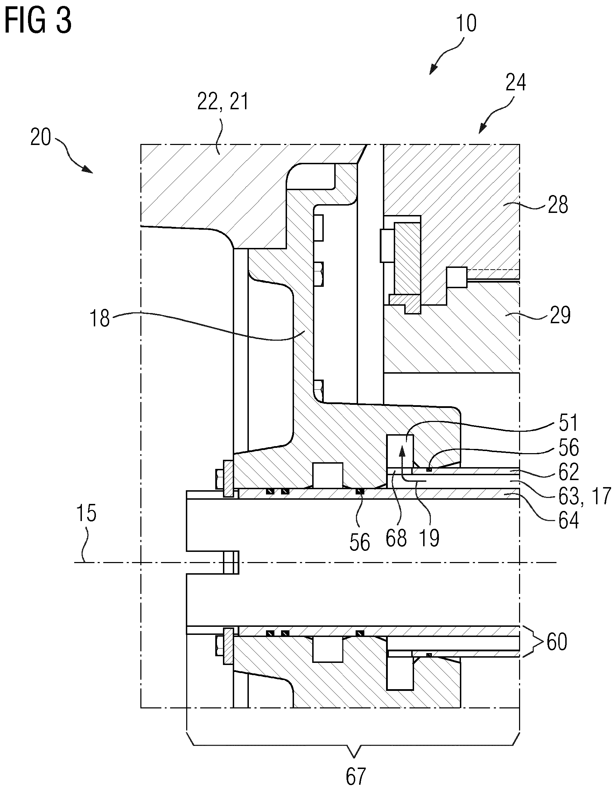

In FIG 3 ist schematisch eine weitere Auslassstelle 68 im Bereich des ersten Endes 67 des doppelwandigen Rohr 60 des Planetengetriebes 10 gemäß FIG 1 dargestellt. Das innere Rohr 64 überragt das äußere Rohr 62 entlang der Hauptdrehachse 15 und ist drehfest mit dem Deckel 18 verbunden. Das äußere Rohr 62 ist auch drehfest mit dem Deckel 18 bzw. dem inneren Rohr 64 verbunden, so dass zwischen dem äußeren und dem inneren Rohr 62, 64 bei einer Drehung der Eingangswelle 21 bzw. des Planetenträger 22 der ersten Planetenstufe 20 im die Hauptdrehachse 15 keine Relativdrehung vorliegt. Der Ringkanal 63, der zwischen dem äußeren Rohr 62 und dem inneren Rohr 64 vorliegt, ist über Dichtungsringe 56 abgedichtet. Die Dichtungsringe 56 sind in Nuten am inneren Rohr 64 bzw. dem äußeren Rohr 62 angeordnet. Dadurch, dass zwischen dem äußeren und dem inneren Rohr 62, 64 keine Relativdrehung vorliegt, sind die Dichtungsringe 56 nur statisch auf Druck beansprucht, was im Wesentlichen verschleißfrei ist. Dementsprechend liegt an der weiteren Auslassstelle 68 im Bereich des ersten Endes 67 eine zuverlässige Möglichkeit vor, die erste Planetenstufe 20 mit Schmierstoff 19 zu versorgen. Hierzu ist der Deckel 18 mit einer umlaufenden Schmierstoffnut 51 versehen. Die erste Planetenstufe 20 weist mindestens fünf, vorzugsweise sieben bis zehn Planetenräder 24 auf, die in FIG 3 nicht näher dargestellt sind, so dass für eine hinreichende Versorgung mit Schmierstoff 19 ein erhöhter Förderdruck 17, ein Ringkanal 63 mit erhöhtem Querschnitt und/oder ein erhöhter Strömungsquerschnitt an der Auslassstelle 65 möglich ist. Da die Dichtungsringe 56 im Wesentlichen nur statisch beansprucht sind, bieten diese hinreichend Reserve in puncto Dichtungswirkung, um beispielsweise einem erhöhten Förderdruck 17 dauerhaft standzuhalten und eine verlustarme bis verlustfreie Schmierstoffversorgung zu sichern. Hierdurch wird insgesamt eine einfache und gleichzeitig zuverlässige Versorgung der ersten Planetenstufe 20 mit Schmierstoff 19 gewährleistet. Dadurch wiederum kann die erste Planetenstufe 20, die aufgrund der erhöhten Zahl an Planetenrädern 24 eine gesteigerte Leistungsdichte aufweist, in praktikabler Weise mit niedrigen bis gar keinen Leckageverlusten verwirklicht werden.

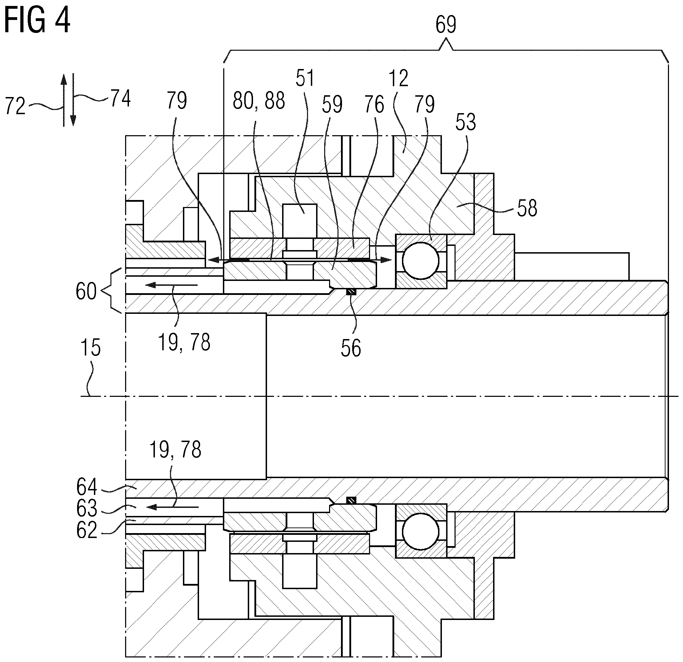

Eine Detailansicht einer Zulaufbuchse 76 am zweiten Ende 69 des doppelwandigen Rohr 60, wie im Planetengetriebe 10 nach FIG 1 eingesetzt, ist in FIG 4 im Längsschnitt dargestellt. Über ein umlaufende Schmierstoffnut 51 wird der Zulaufbuchse 76 Schmierstoff 19 zugeführt. Die Zulaufbuchse 76 ist am Gehäuse 12 oder einem Gehäusedeckel des Planetengetriebes 10 drehfest angeordnet, so dass bei einer Drehung des doppelwandigen Rohr 60 um die Hauptdrehachse 15 zwischen der Zulaufbuchse 76 und dem äußeren Rohr 62 eine Relativdrehung vorliegt. Zwischen dem äußeren Rohr 62 und der Zulaufbuchse 76 ist ein Spalt 80 ausgebildet, der im Wesentlichen dem Spalt 80 im mittleren Abschnitt 70, wie in FIG 2 dargestellt, entspricht. Über die Zulaufbuchse 76 wird Schmierstoff 19 in den Ringkanal 63 zwischen dem äußeren und dem inneren Rohr 62, 64 zugeführt und eine Schmierstoffströmung 78 hervorgerufen. Dadurch, dass zwischen dem äußeren und dem inneren Rohr 62, 64 keine Relativdrehung vorliegt, ist ein Dichtungsring 56 im Bereich des zweiten Endes 69 im Wesentlichen nur statisch auf Druck beansprucht und somit geeignet, einem erhöhten Förderdruck 17 im Schmierstoff 19 standzuhalten. Ferner werden durch den Spalt 80 Leckageverluste 79 an der Zulaufbuchse 76 minimiert. Das innere Rohr 64 ist am Gehäuse 12 oder einem Gehäusedeckel 58 in einem Wälzlager 53 drehbar aufgenommen. Das Wälzlager 53 ist im Bereich des Dichtungsrings 56 am Ende des äußeren Rohrs 62, also im Wesentlichen entlang der Hauptdrehachse 15, benachbart dazu angeordnet. Das Wälzlager 53 bietet ein hohes Maß an Stabilität gegen Verlagerung des inneren Rohrs 64 in Radialrichtung. Eine radial innere und radial äußere Richtung sind in FIG 4 analog zu FIG 1 mit den Pfeilen 72, 74 symbolisiert. Hierdurch wird einer Veränderung der Spalthöhe 88 an der Zulaufbuchse 76 infolge von Verlagerungen durch Fertigungsabweichungen und Toleranzen entgegengewirkt. Dies wiederum führt dazu, dass Leckageverluste 79 an der Zulaufbuchse 76 weiter minimiert werden.

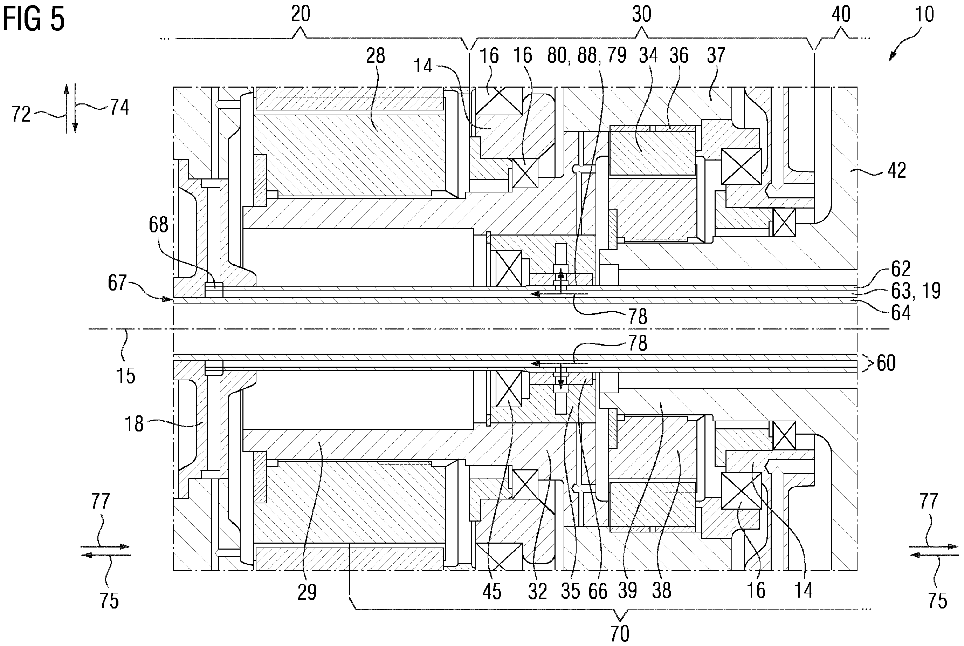

FIG 5 zeigt in einem Längsschnitt schematisch eine Ausführungsform des beanspruchten Planetengetriebes 10 im Bereich der zweiten Planetenstufe 30. FIG 5 zeigt das Planetengetriebe 10 im Bereich eines ersten Endes 67 des doppelwandigen Rohrs 60 und im Bereich dessen mittleren Abschnitts 70, in dem sich zumindest die zweite Planetenstufe 30 befindet. Die zweite Planetenstufe 30 ist dabei entlang der Hauptdrehachse 15 des Planetengetriebes 10 zwischen der ersten und dritten Planetenstufe 20, 40 angeordnet. Die erste Planetenstufe 20 weist ein Sonnenrad 28 auf, das mit einer Sonnenwelle 29 drehmomentübertragend verbunden ist. Die Sonnenwelle 29 der ersten Planetenstufe 20 ist einstückig mit einem Planetenträger 32 der zweiten Planetenstufe 30 ausgebildet. Der Planetenträger 32 der zweiten Planetenstufe 30 ist über Steglager 16, die an Gehäusewandungen 14 angeordnet sind, drehbar gelagert. Im Planetenträger 32 sind Planetenräder 34 drehbar auf Gleitlagern 36 angeordnet, die wiederum auf Planetenradbolzen 37 angebracht sind. Die Planetenradbolzen 37 sind lösbar mit dem Planetenträger 32 der zweiten Planetenstufe 30 verbunden. Die Planetenräder 34 kämmen wiederum mit einem Sonnenrad 38 der zweiten Planetenstufe 30, das drehmomentübertragend mit einer Sonnenwelle 39 verbunden ist. Durch die Sonnenwelle 39 der zweiten Planetenstufe 30 wird wiederum die dritte Planetenstufe 40 angetrieben.

Im Bereich der Hauptdrehachse 15 ist das doppelwandige Rohr 60 angeordnet, das ein äußeres Rohr 62 und ein inneres Rohr 64 umfasst. Das äußere und das innere Rohr 62, 64 bilden einen Ringkanal 63 aus, durch den ein Schmierstoff 19 gefördert wird. Eine Schmierstoffströmung 78, die sich im bestimmungsgemäßen Betrieb des Planetengetriebes 10 einstellt, ist in FIG 5 durch einen entsprechenden Pfeil dargestellt. Im Bereich der zweiten Planetenstufe 30 ist eine Buchse 66 angeordnet, durch die Schmierstoff 19 aus einer Öffnung am äußeren Rohr 62 aus dem Ringkanal 63 in die zweite Planetenstufe 30 geleitet wird. Zwischen der Buchse 66 und dem äußeren Rohr 62 ist ein Spalt 80 ausgebildet, so dass keine unmittelbare Berührung zwischen dem äußeren Rohr 62 und der Buchse 66 vorliegt. Die Buchse 66 ist an einer Bodenplatte 35 des Planetenträgers 32 der zweiten Planetenstufe 30 angeordnet. Ferner ist im Bereich der Buchse 66, also im Wesentlichen axial benachbart, am Planetenträger 32 ein Führungslager 45 angeordnet. Durch das Führungslager 45 wird das äußere Rohr 62 gegenüber dem Planetenträger 32 in eine Radialrichtung abgestützt. Eine radial äußere Richtung ist in FIG 5 durch den Pfeil 72, eine radial innere Richtung durch den Pfeil 74 symbolisiert. Dadurch, dass das Führungslager 45 und die Buchse 66 sich mit dem Planetenträger 32 der zweiten Planetenstufe 30 an der gleichen Komponente abstützen und in Axialrichtung im Wesentlichen benachbart zueinander positioniert sind, wird das äußere Rohr 62 durch das Führungslager 45 auch gegenüber der Buchse 66 gehalten. Dadurch wird einer radialen Verbiegung oder Auslenkung des äußeren Rohrs 62 im Bereich der Buchse 66 entgegengewirkt. Eine solche radiale Verbiegung oder Auslenkung führt zu einer Veränderung des Spalts 80 zwischen dem äußeren Rohr 62 und der Buchse 66, insbesondere in puncto Spalthöhe 88. Dadurch werden übermäßige Leckageverluste 79 an der Buchse 66 vermieden.

Das Führungslager 45 kann als einfaches Wälzlager, beispielsweise als Kugellager, ausgebildet sein. Das Führungslager 45 folgt im bestimmungsgemäßen Betrieb lediglich einer Relativdrehung zwischen dem Planetenträger 32 der zweiten Planetenstufe 30 und dem doppelwandigen Rohr 60. Dementsprechend gering sind die Anforderungen an das Führungslager 45 in puncto Laufleistung in Umdrehungen. Das Führungslager 45 bietet somit eine einfache Möglichkeit, die Buchse 66 in Kombination mit dem doppelwandigen Rohr 60 auch in solchen Planetengetrieben 10 einzusetzen, bei denen im Bereich der zweiten Planetenstufe 30 mit erhöhten Verlagerung zu rechnen ist. Die in FIG 5 gezeigt Ausführungsform der beanspruchten Lösung erlaubt es somit, diese auf Planetengetriebe 10 mit hohen Leistungsanforderungen in einfacher Weise anzupassen. Dies gilt insbesondere für Planetengetriebe 10, die in Windkraftanlagen eingesetzt werden.

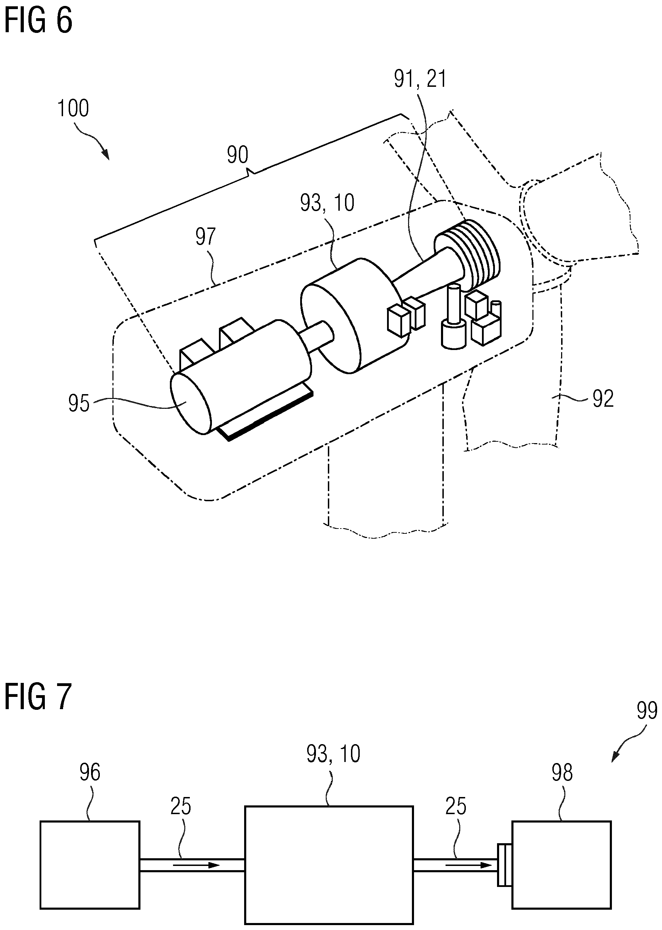

Ferner ist in FIG 6 eine Ausführungsform einer beanspruchten Windkraftanlage 100 dargestellt. Die Windkraftanlage 100 weist einen Rotor 92 auf, der an einer Gondel 97 drehbar angebracht ist. Der Rotor 92 ist mit einer Rotorwelle 91 verbunden, die als Eingangswelle 21 dient und durch die über ein Getriebe 93 ein Generator 95 angetrieben wird. Die Rotorwelle 91, das Getriebe 93 und der Generator 95 gehören zu einem Antriebsstrang 90 der Windkraftanlage 100, der in der Gondel 97 aufgenommen ist. Das Getriebe 93 ist dabei als ein Planetengetriebe 10 nach einer der oben skizzierten Ausführungsformen ausgebildet.

FIG 7 zeigt schematisch den Aufbau einer beanspruchten Industrie-Applikation 99, die eine Antriebseinheit 96 und eine Abtriebseinheit 98 aufweist, die drehmomentübertragend über ein Getriebe 93 miteinander verbunden sind. Die Antriebseinheit 96 ist dazu ausgebildet, eine Antriebsleistung 25 bereitzustellen, die für den Betrieb der Abtriebseinheit 98 notwendig ist. Die Antriebseinheit 96 kann dazu als Elektromotor, Verbrennungsmotor oder Hydraulikmotor ausgebildet sein. Die Abtriebseinheit 98 ist als mechanische Anwendung ausgebildet. Die Abtriebseinheit 98 ist dementsprechend ausgebildet, dass die Industrie-Applikation 99 beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist. Das Getriebe 93 ist dabei als ein Planetengetriebe 10 gemäß einer der oben skizzierten Ausführungsformen ausgebildet. Dabei können die Funktionen der Eingangswelle 21 und die Ausgangswelle 55, wie in FIG 1 gezeigt, auch vertauscht sein.

## Patentansprüche

1. Planetengetriebe (10), umfassend zumindest eine erste und eine zweite Planetenstufe (20, 30) und ein doppelwandiges Rohr (60), das in einem Bereich einer Hauptdrehachse (15) des Planetengetriebes (10) angebracht ist, das ein inneres und ein äußeres Rohr (62, 64) aufweist ,durch die ein Ringkanal (63) für einen Schmierstoff gebildet wird, und das, entlang der Hauptdrehachse betrachtet, in einem mittleren Abschnitt (70) eine Auslassstelle (65) aufweist, die zu einem Abgeben von Schmierstoff aus dem doppelwandigen Rohr in eine Getriebekomponente ausgebildet ist, wobei an der Auslassstelle (65) eine Buchse (66) angeordnet ist und an der Auslassstelle (65) zwischen der Buchse (66) und dem doppelwandigen Rohr (60) ein Spalt (80) ausgebildet ist
**dadurch gekennzeichnet, dass**
das Planetengetriebe in einem Bereich der Auslassstelle (65) im mittleren Abschnitt (70) ein Führungslager (45) aufweist, das zu einem Einstellen des Spalts (80) ausgebildet ist.

2. Planetengetriebe (10) nach Anspruch 1 **dadurch gekennzeichnet, dass** eine Spalthöhe des Spalts (80) 0,1 mm bis 0,5 mm, insbesondere 0,25 mm bis 0,35 mm beträgt.

3. Planetengetriebe(10) (10) nach Anspruch 1 oder 2 **dadurch gekennzeichnet, dass** das Führungslager(45) derart positioniert ist, dass es sich gegen die gleiche Getriebekomponente wie die Buchse (66) abstützt, und dass die Buchse (66) und das Führungslager (45) an einer Innenseite einer Nabe eines Planetenträgers (32) der zweiten Planetenstufe (30) angeordnet sind.

4. Planetengetriebe (10) nach einem der Ansprüche 1 bis 3,
**dadurch gekennzeichnet, dass** die erste Planetenstufe (20) zumindest fünf Planetenräder (24) aufweist und/oder die zweite Planetenstufe (30) zumindest vier Planetenräder (34) aufweist.

5. Planetengetriebe (10) nach einem der Ansprüche 1 bis 4, **dadurch gekennzeichnet, dass** eine Breite (61) der Buchse (66) einer Wandstärke (87) einer Bodenplatte (35) eines Planetenträgers (32) der zweiten Planetenstufe (30) entspricht.

6. Planetengetriebe (10) nach einem der Ansprüche 1 bis 5,
**dadurch gekennzeichnet, dass** die zweite Planetenstufe (30) zwischen der ersten und einer dritten Planetenstufe (20, 40) angeordnet ist.

7. Planetengetriebe (10) nach einem der Ansprüche 1 bis 6,
**dadurch gekennzeichnet, dass** das doppelwandige Rohr (60) so ausgebildet ist, dass es zerstörungsfrei demontierbar ist.

8. Planetengetriebe (10) nach einem der Ansprüche 1 bis 7, **dadurch gekennzeichnet, dass** der Planetenträger (32) der zweiten Planetenstufe (30) in zumindest einem Lager (16) aufgenommen ist, das zu einem Aufnehmen von Axialkräften und Radialkräften ausgebildet ist.

9. Planetengetriebe (10) nach Anspruch 1 bis 8, **dadurch gekennzeichnet, dass** in einem Bereich eines ersten Endes (67) des doppelwandigen Rohrs (60) eine weitere Auslassstelle (68) ausgebildet ist.

10. Planetengetriebe (10) nach einem der Ansprüche 1 bis 9,
**dadurch gekennzeichnet, dass** an einem zweiten Ende (69) des doppelwandigen Rohrs (60) eine Zulaufbuchse (76) angeordnet ist.

11. Antriebsstrang (90) für eine Windkraftanlage (100), umfassend eine Rotorwelle (91), die drehmomentübertragend mit einem Getriebe (93) verbunden ist, das drehmomentübertragend mit einem Generator (95) verbunden ist, **dadurch gekennzeichnet, dass** das Getriebe (93) als Planetengetriebe (10) nach einem der Ansprüche 1 bis 10 ausgebildet ist.

12. Windkraftanlage (100), umfassend einen Rotor (92), der drehbar an einer Gondel (97) angebracht ist, in der ein Antriebsstrang (90) aufgenommen ist, **dadurch gekennzeichnet, dass** der Antriebsstrang (90) nach Anspruch 11 ausgebildet ist.

13. Industrie-Applikation (99), umfassend eine Antriebseinheit (96) und eine Abtriebseinheit (98), die drehmomentübertragend über ein Getriebe (93) miteinander verbunden sind, **dadurch gekennzeichnet, dass** das Getriebe (93) als Planetengetriebe (10) nach einem der Ansprüche 1 bis 10 ausgebildet ist.

## Claims

1. Planetary gear (10), comprising at least one first and one second planetary stage (20, 30) and a double-wall tube (60) which is attached to a region of a main rotation axis (15) of the planetary gear (10) and which has an inner tube (64) and an outer tube (62) by way of which an annular duct (63) for a lubricant is formed, and which - when viewed along the main rotation axis - in a central portion (70) has an outlet point (65) which is configured for dispensing lubricant from the double-wall tube into a gear component, wherein a bushing (66) is disposed on the outlet point (65), and a gap (80) is configured at the outlet point (65), between the bushing (66) and the double-wall tube (60), **characterized in that** the planetary gear in a region of the outlet point (65) in the central portion (70) has a pilot bearing (45) which is configured for adjusting the gap (80).

2. Planetary gear (10) according to Claim 1, **characterized in that** a gap height of the gap (80) is 0.1 mm to 0.5 mm, in particular 0.25 mm to 0.35 mm.

3. Planetary gear (10) according to Claim 1 or 2, **characterized in that** the pilot bearing (45) is positioned in such a manner that said pilot bearing (45) is supported on the same gear component as the bushing (66), and **in that** the bushing (66) and the pilot bearing (45) are disposed on an internal side of a hub of a planetary carrier (32) of the second planetary stage (30).

4. Planetary gear (10) according to one of Claims 1 to 3, **characterized in that** the first planetary stage (20) has at least five planetary wheels (24), and/or the second planetary stage (30) has at least four planetary wheels (34).

5. Planetary gear (10) according to one of Claims 1 to 4, **characterized in that** a width (61) of the bushing (66) corresponds to a wall thickness (87) of a base plate (35) of a planetary carrier (32) of the second planetary stage (30).

6. Planetary gear (10) according to one of Claims 1 to 5, **characterized in that** the second planetary stage (30) is disposed between the first planetary stage (20) and a third planetary stage (40).

7. Planetary gear (10) according to one of Claims 1 to 6, **characterized in that** the double-wall tube (60) is configured such that said double-wall tube (60) is able to be disassembled in a non-destructive manner.

8. Planetary gear (10) according to one of Claims 1 to 7, **characterized in that** the planetary carrier (32) of the second planetary stage (30) is received in at least one bearing (16) that is configured for absorbing axial forces and radial forces.

9. Planetary gear (10) according to Claim 1 to 8, **characterized in that** a further outlet point (68) is configured in a region of a first end (67) of the double-wall tube (60).

10. Planetary gear (10) according to one of Claims 1 to 9, **characterized in that** an inflow bushing (76) is disposed on a second end (69) of the double-wall tube (60).

11. Drive train (90) for a wind power installation (100), comprising a rotor shaft (91) which in a torque-transmitting manner is connected to a gear (93) that in a torque-transmitting manner is connected to a generator (95), **characterized in that** the gear (93) is configured as a planetary gear (10) according to one of Claims 1 to 10.

12. Wind power installation (100), comprising a rotor (92) that is rotatably attached to a nacelle (97) in which a drive train (90) is received, **characterized in that** the drive train (90) is configured according to Claim 11.

13. Industrial application (99), comprising a drive input unit (96) and a drive output unit (98) which in a torque-transmitting manner are connected to one another by way of a gear (93), **characterized in that** the gear (93) is configured as a planetary gear (10) according to one of Claims 1 to 10.

## Revendications

1. Engrenage épicycloïdal (10), comprenant au moins un premier et un deuxième étage planétaire (20, 30) et un tube (60) à double paroi qui est installé dans une région d'un axe de rotation principal (15) de l'engrenage épicycloïdal (10), qui présente un tube intérieur et un tube extérieur (62, 64), à travers lesquels est formé un canal annulaire (63) pour un lubrifiant, et qui, considéré le long de l'axe de rotation principal, présente un point de sortie (65) dans une partie centrale (70), lequel est réalisé pour une distribution de lubrifiant à partir du tube à double paroi dans un composant d'engrenage, une douille (66) étant disposée au niveau du point de sortie (65) et un interstice (80) étant réalisé entre la douille (66) et le tube (60) à double paroi au niveau du point de sortie (65),
**caractérisé en ce que**
l'engrenage épicycloïdal présente, dans une région du point de sortie (65), dans la partie centrale (70), un palier de guidage (45) qui est réalisé pour un réglage de l'interstice (80).

2. Engrenage épicycloïdal (10) selon la revendication 1, **caractérisé en ce qu'**une hauteur de l'interstice (80) vaut de 0,1 mm à 0,5 mm, en particulier de 0,25 mm à 0,35 mm.

3. Engrenage épicycloïdal (10) selon la revendication 1 ou 2, **caractérisé en ce que** le palier de guidage (45) est positionné de telle sorte qu'il s'appuie contre le même composant d'engrenage que la douille (66), et **en ce que** la douille (66) et le palier de guidage (45) sont disposés sur un côté intérieur d'un moyeu d'un portesatellites (32) du deuxième étage planétaire (30).

4. Engrenage épicycloïdal (10) selon l'une des revendications 1 à 3,
**caractérisé en ce que** le premier étage planétaire (20) présente au moins cinq roues satellites (24) et/ou le deuxième étage planétaire (30) présente au moins quatre roues satellites (34).

5. Engrenage épicycloïdal (10) selon l'une des revendications 1 à 4, **caractérisé en ce qu'**une largeur (61) de la douille (66) correspond à une épaisseur de paroi (87) d'une plaque de base (35) d'un portesatellites (32) du deuxième étage planétaire (30).

6. Engrenage épicycloïdal (10) selon l'une des revendications 1 à 5,
**caractérisé en ce que** le deuxième étage planétaire (30) est disposé entre le premier et un troisième étage planétaire (20, 40).

7. Engrenage épicycloïdal (10) selon l'une des revendications 1 à 6, **caractérisé en ce que** le tube (60) à double paroi est réalisé de telle sorte qu'il peut être démonté de manière non destructive.

8. Engrenage épicycloïdal (10) selon l'une des revendications 1 à 7, **caractérisé en ce que** le portesatellites (32) du deuxième étage planétaire (30) est reçu dans au moins un palier (16) qui est réalisé pour une réception de forces axiales et de forces radiales.

9. Engrenage épicycloïdal (10) selon les revendications 1 à 8, **caractérisé en ce qu'**un autre point de sortie (68) est réalisé dans une région d'une première extrémité (67) du tube (60) à double paroi.

10. Engrenage épicycloïdal (10) selon l'une des revendications 1 à 9,
**caractérisé en ce qu'**un manchon d'alimentation (76) est disposé à une deuxième extrémité (69) du tube (60) à double paroi.

11. Chaîne cinématique (90) pour une éolienne (100), comprenant un arbre de rotor (91) qui est relié à un engrenage (93) de manière à transmettre un couple, lequel engrenage est relié à un générateur (95) de manière à transmettre un couple, **caractérisée en ce que** l'engrenage (93) est réalisé sous forme d'engrenage épicycloïdal (10) selon l'une des revendications 1 à 10.

12. Éolienne (100), comprenant un rotor (92) qui est installé de manière rotative sur une nacelle (97) dans laquelle est reçue une chaîne cinématique (90), **caractérisée en ce que** la chaîne cinématique (90) est réalisée selon la revendication 11.

13. Application industrielle (99), comprenant une unité d'entraînement (96) et une unité de sortie (98), qui sont reliées l'une à l'autre par le biais d'un engrenage (93) de manière à transmettre un couple,
**caractérisée en ce que** l'engrenage (93) est réalisé sous forme d'engrenage épicycloïdal (10) selon l'une des revendications 1 à 10.
